# NEUE EUROPÄISCHE PATENTSCHRIFT

(11) **EP 0 808 228 B2**
(45) Veröffentlichungstag und Bekanntmachung des Hinweises auf die Entscheidung über den Einspruch: **15.11.2006**
(45) Hinweis auf die Patenterteilung: 24.03.1999
(21) Anmeldenummer: 95942634.7
(22) Anmeldetag: 13.12.1995
(51) Int. Cl.: B23D 81/00, B23K 26/00, B23P 17/00

(54) **VERFAHREN ZUM BRUCHTRENNEN VON WERKSTÜCKEN**
METHOD FOR THE FRACTURE-SEPARATION OF WORKPIECES
PROCEDE DE COUPURE DE PIECES PAR RUPTURE

(30) Priorität: 06.02.1995 DE 19503789; 15.09.1995 DE 19534360; 01.12.1995 DE 29519126 U
(43) Veröffentlichungstag der Anmeldung: 26.11.1997
(73) Patentinhaber: Mauser-Werke Oberndorf Maschinenbau GmbH, 78727 Oberndorf (DE)
(72) Erfinder: HOFMANN, Gerhard, D-72475 Bitz (DE); GRUHLER, Siegfried, D-72189 Vöhringen (DE); KUTZ, Helmut, D-72175 Dornham (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE1995/001790
(87) Internationale Veröffentlichungsnummer: WO 1996/024458

(56) Entgegenhaltungen:
- DE-A- 2 937 918
- DE-A- 4 316 012
- US-A- 5 208 979
- John M. Ruselowski : "Laser Applications in the AutomotiveIndustries",26th International Symposium on Automotive Technology and Automation, Aachen 13th-17 Sept. 1993
- G Herziger, P. Loosen : "Wekstoffbeasbeitung mit Laserstrahlung" Carl Hanser Verlag München/Wien, Seiten 27,44-52,70,210,253

## Beschreibung

Die Erfindung betrifft ein Verfahren zum Bruchtrennen von Werkstücken gemäß dem Oberbegriff des Patentanspruchs 1 und ein Werkstück, das nach dem gattungsgemäßen Verfahren verarbeitbar ist.

Das gattungsgemäße Bruchtrennen von Werkstücken findet dann Anwendung, wenn die bruchgetrennten Teile nach dem Bruchtrennvorgang (Cracken) nach einigen Zwischenbearbeitungsschritten wieder zusammengefügt werden sollen. Durch die beim Bruchtrennen entstehende unregelmäßige, vergleichsweise großflächige Bruchfläche wird ein definiertes Zusammenfügen der Werkstücke erleichtert, wobei die Verzahnungen ein seitliches Verschieben der Werkstückteile verhindern.

Das Bruchtrennverfahren findet insbesondere bei der Herstellung von Pleueln für Verbrennungsmotoren Anwendung, wobei zunächst ein Pleuelrohling mit einem Pleuelkopf, einem Pleuelschaft und einem Pleuellagerabschnitt hergestellt wird. In der Innenumfangsfläche des Pleuellagerabschnittes werden dann zwei einander diametral gegenüberliegende Kerben ausgebildet, die eine Bruchebene vorgeben, entlang der das Pleuel in ein Teil mit einem Pleuelfuß und einen Pleueldeckel aufgetrennt werden. Das Bruchtrennen als solches erfolgt in einer Bruchtrennstation, in der ein Spreizdorn in den Pleuellagerabschnitt abgesenkt wird, so daß aufgrund der aufgebrachten Spreizkräfte und der Spannungskonzentration in den Kerbscheiteln, das Pleuel entlang der vorgegebenen Bruchebene bricht

Bisher wurden im wesentlichen zwei Verfahrensweisen zum Einbringen der Kerbe eingesetzt Ein Verfahren besteht darin, die Kerben durch ein Räumverfahren auszubilden, wobei, bedingt durch die Form des Räumwerkzeugs V-förmige Kerben ausgebildet werden, die eine verhältnismäßig große Kerbweite aufweisen.

Derartige Räumverfahren haben den Nachteil, daß relativ teure Werkzeuge (Räumnadeln) erforderlich sind, und daß bedingt durch die Abnutzung der Werkzeuge Maßabweichungen in den Kerbmaßen auftreten können, die bei den hohen Qualitätsanforderungen der Kfz-Industrie nicht akzeptabel sind. Um diesen Nachteil zu beseitigen, müssen die Räumnadeln in vorbestimmten Abständen geschliffen oder ausgewechselt werden, wodurch die Produktionskosten erhöht werden.

Zudem müssen bei den bekannten Räumverfahren Kühl- und Schmiermittel eingesetzt werden, um die Standzeit der Werkzeuge zu erhöhen und eine Gefügeänderung des Pleuels durch Überhitzung der Beärbeitungsflächen zu verhindern. Um eine Verschmutzung der sonstigen Bearbeitungsstationen zu verhindern, muß die Räumanlage örtlich von der Bruchtrennstation und den sonstigen Stationen getrennt und das Pleuel vor dem Weitertransport zur nächsten Bearbeitungsstation sorgfältig gereinigt werden.

Um diese Nachteile zu überwinden, ist in der US-Patentschrift 5,208,979 ein Verfahren vorgeschlagen, bei dem ein Laser zum Einbringen der Kerben verwendet wird.

Zum Einbringen der wiederum V-förmigen Kerben wird ein Impuls-Laser verwendet, der mit einer Leistung von 400 W betrieben wird.

Beim Einsatz dieses Verfahrens hat es sich gezeigt, daß es äußerst schwierig ist, die Laserleistung und die Fokussierung des Laserstrahls derart zu steuern, daß einerseits ein vollständiges Aufschmelzen des Materials in der V-Kerbe gewährleistet ist, andererseits eine vorgegebene Maximaltiefe der Kerbe nicht überschritten wird.

Bei ungünstigen Betriebsbedingungen konnte es auftreten, daß der Laserstrahl die Umfangswandung des Pleuellagerabschnittes vollständig durchdrang; so daß die Anlagefläche zwischen Pleueldeckel und Pleuelfuß an dieser Durchdringungsstelle verringert ist.

Demgegenüber liegt der Erfindung die Aufgabe zugrunde, ein Verfahren zum Bruchtrennen eines Werkstückes und ein dafür geeignetes Werkstück zu schaffen durch die bei minimalem energetischem Aufwand eine reproduzierbare Bruchfläche erzielbar ist.

Diese Aufgabe wird hinsichtlich des Verfahrens durch die Merkmale des Patentanspruchs 1 und hinsichtlich des Werkstücks durch die Merkmale des Patentanspruchs 10 gelöst.

Durch die Maßnahme, die Kerbe aus einer Vielzahl von Kerbabschnitten auszubilden, die linienförmig hintereinanderliegend angeordnet sind, wobei, die Kerbabschnitte als schräg verlaufende zylinder oder fingerförmige Sacklöcher ausgebildet werden, und die in Form einer "Perforation" die Bruchebene vorbestimmen, kann das Volumen des aufzuschmelzenden und zu verdampfenden Materials gegenüber der aus der US-5,208,979 bekannten Lösung wesentlich verringert werden. Durch diese Weiterbildung läßt sich ein Laser mit einer erheblich verringerten Leistung einsetzen, die nur noch einen Bruchteil der Leistung des in dem US-Patent eingesetzten Lasers beträgt. Die Schrägstellung dieser Sacklöcher ermöglicht es, daß der Laserkopf mit seiner Optik im wesentlichen oberhalb oder unterhalb des Werkstücks angeordnet bleiben kann.

Durch die erheblich verringerte Leistung (sog. mittlere Leistung) wird die Erwärmung des Werkstückes im Bereich der Bearbeitungsfläche verringert, so daß einer unerwünschten Gefügeumwandlung (MartensitBildung) im Kerbenbereich vorgebeugt wird.

Des weiteren ermöglicht es die geringe Leistung und der damit verbundene geringe Platzbedarf für die Strahlungseinrichtung, beispielsweise das Lasergerät, dieses in eine Bruchtrennanlage zu integrieren, wie sie beispielsweise aus einer Voranmeldung der Anmelderin bekannt ist. Auf diese Weise wird es bei minimalem Platz- und Energiebedarf erstmals ermöglicht, das Einbringen der Kerben, das Bruchtrennen, Weiterbearbeiten und Zusammenfügen des Werkstückes, beispielsweise eines Pleuels, in einer einzigen Anlage durchzuführen, wobei der Transport des Werkstücks über eine allen Bearbeitungsstationen gemeinsame Transporteinrichtung erfolgen kann.

Der Energiebedarf des Lasers läßt sich weiter minimieren, indem der Strahl während der Bearbeitung einer Kerbe seine, Orientierung zur Kerbebene beibehält, d.h. der Laserstrahl wird lediglich entlang einer Achse mit Bezug zum Werkstück bewegt, wobei die Breite jedes Kerbabschnittes der Breite der Kerbe entspricht und durch den Einwirkbereich des Laserstrahls vorgegeben ist.

Ein verbessertes Bruchverhalten erhält man, wenn die Kerbe mit einer gemeinsamen Kerbbasis ausgebildet wird, aus der heraus sich die Kerbabschnitte in die Wandung der Werkstückausnehmung hineinerstrekken.

Besonders vorteilhaft ist es, wenn die Kerbabschnitte und die Kerbe mit den Abmessungen gemäß Unteranspruch 6 oder 11 ausgebildet wird.

Aus wirtschaftlichen Gründen kann es erforderlich sein, daß die Anzahl der pro Zeiteinheit gekerbten Werkstücke erhöht werden muß. In diesem Fall ist vorgesehen, dem Laser d.h. der Einheit, in der der eigentliche Laserstrahl erzeugt wird, zwei Fokussieroptiken zuzuordnen. In diesem Fall wird der Laserstrahl über Strahlweichen und/oder Strahlteiler zu jeweils einer Fokussieroptik geleitet bzw. auf beide Fokussieroptiken aufgeteilt. Diese Variante ermöglicht es, daß zwei Werkstücke in einem Bearbeitungszyklus bearbeitet werden können.

Ein derartiges Verfahren kann beispielsweise mit einem Laser durchgeführt werden, bei dem die beiden Optiken getrennt vom Lasergerät verschwenkbar und in zwei oder drei Achsen verschiebbar in der Laserstation geführt und Ober Lichtleiter mit dem stationär angeordneten Lasergerät verbunden sind. Dabei sind die Achsen der beiden Fokussieroptiken vorzugsweise parallel und im Abstand zueinander angeordnet und der Laserstrahl wird vorzugsweise über eine Strahlweiche wahlweise an eine der Fokussieroptiken weitergeleitet, so daß jeweils nur eine der Optiken arbeitet. Durch entsprechende Betätigung der Strahlweiche läßt sich somit bei einem Arbeitsvorschub der beiden Fokussieroptiken die Kerbe eines Werkstücks ausbilden, während beim Rückhub und entsprechender Umsteuerung der Strahlweiche die Kerbe des zweiten Werkstücks ausgebildet wird. Durch eine synchrone Schwerkbewegung beider Optiken um etwa 90° und gegebenenfalls eine seitliche Verschiebung der Fokussieroptiken können darm nacheinander die beiden restlichen Kerben beider Werkstücke ausgebildet werden. Da die beiden Optiken Ober Lichtleiter mit dem Lasergerät verbunden sind und nur noch die beiden Optiken verschwenk- und verschiebbar gelagert sein müssen, während das vergleichsweise schwere und voluminöse Lasergerät stationär gelagert ist, sind bei einer derartigen Ausführung die Anforderungen an die Schwenklagerung und an die Bewegungsdämpfung gegenüber der vorbeschriebenen Lösung ganz erheblich verringert Die elastischen Lichtleiter lassen einen großen Spielraum für Vorschub- und Schwenkbewegungen, ohne daß es besonderer Führungen oder Abstützungen bedarf.

Einem Lasergerät kann ein Fokussierkopf mit zwei Fokussieroptiken zugeordnet werden, deren optische Achsen um etwa 90° zueinander angestellt sind. Hier wird der Fokussierkopf gemeinsam mit dem Lasergerät in drei Achsen verschiebbar in der Laserstation gelagert, wobei es jedoch aufgrund der 90°-Anstellung der Fokussieroptiken keiner Schwenkbewegung bedarf, um die einander diametral gegenüberliegenden Kerben auszubilden. Außerdem kann sowohl ein Strahlteiler als auch eine Strahlweiche eingesetzt werden, wobei durch entsprechende geometrische Abstimmung der beiden Fokussieroptiken und Aufteilung des vom gemeinsamen Lasergerät erzeugten Laserstrahls zunächst gleichzeitig die voneinander entfernten Kerben zweier parallel nebeneinander angeordneter Werkstücke ausgebildet werden. Durch entsprechende Ansteuerung, jeweils einer Fokussieroptik über eine Strahlweiche und entsprechende Querverschiebung des Fokussier-Kopfs (inklusive Lasergerät) werden dann in zwei aufeinanderfolgenden Arbeitsgängen die beiden verbleibenden Kerben der beiden Werkstücke ausgebildet. Das heißt, es können vier Kerben durch drei Arbeitshübe ausgebildet werden, so daß die Bearbeitungszeit reduzierbar ist. Des weiteren erlaubt es die Verwendung des Strahlteilers einen Laser mit höherer Leistung einzusetzen, so daß praktisch über jede Fokussieroptik ein Laserstrahl mit der vorstehend beschriebenen Leistung aufbringbar und somit die gleichzeitige Ausbildung zweier Kerben in einer optimalen Zeit durchführbar ist.

Vorzugsweise wird ein YAG-Laser verwendet, durch den pro Kerbe eine mittlere Leistung von weniger als 200 W, vorzugsweise 60 W (die Impulsleisung liegt im KW-Bereich) aufbringbar ist.

Die Ausgestaltung des erfindungsgemäßen Werkstücks 10-14 gemäß einer Merkmalskombination der Unteransprüche gewährleistet ein optimales Bruchverhalten, bei einer maximalen Anlagefläche zwischen den beiden nach dem Bruchtrennen erhaltenen Werkzeugteilen.

Weitere vorteilhafte Ausgestaltungen der Erfindung sind Gegenstand der sonstigen Unteransprüche.

Die Erfindung wird im folgenden anhand schematischer Zeichnungen näher erläutert.

Es zeigen:
- Fig. 1: eine Teildarstellung eines nach dem erfindungsgemäßen Verfahren bearbeiteten Pleuels;
- Fig. 2: einen Schnitt entlang der Linie A-A in Fig. 1;
- Fig. 3: eine Detaildarstellung des Pleuels in der Ansicht nach Fig. 2;
- Fig. 4: eine Einrichtung zur Bearbeitung eines Pleuels;
- Fig. 5: eine schematische Seitendarstellung eines nicht zur Erfindung gehörenden Teils der Einrichtung aus Fig. 4;
- Fig. 6: eine Draufsicht auf den in Fig. 5 dargestellten Teil der Einrichtung;
- Fig. 7: eine Laserstation mit einer nicht zur Erfindung gehörenden Lasereinrichtung;
- Fig. 8: eine Detaildarstellung der Fokussieroptiken aus Fig. 7 und
- Fig. 9: einen weiteren nicht zur Erfindung gehörenden Laser zur Durchführung des erfindungsgemäßen Verfahrens.

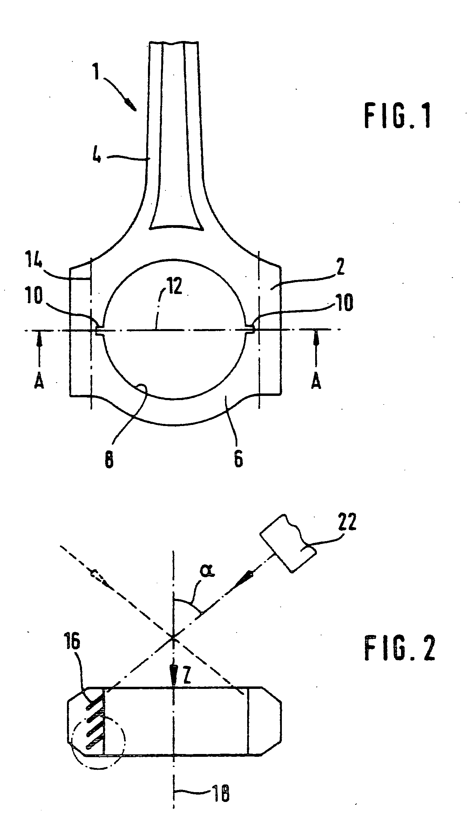

In Fig. 1 ist ein Teil eines Pleuels 1 mit einem Pleuelfuß 2, einem Pleuelschaft 4 und einem Pleueldeckel 6 dargestellt. Der Pleuelfuß 2 und der Pleueldekkel 6 begrenzen eine Pleuellagerausnehmung 8, die ein Gleitlager (nicht gezeigt) zur Abstützung an einer Kurbelwelle eines Verbrennungsmotors aufnimmt.

Ein derartiges Pleuel wird in der Regel geschmiedet oder aus Gußlegierungen hergestellt. Dabei wird zunächst der Pleueldeckel 6 einstückig mit dem Pleuelfuß ausgebildet und die beiden in einem sich anschließenden Bruchtrennvorgang (Cracken) in den Pleueldeckel 6 und die sonstigen Teile des Pleuels 1 aufgetrennt.

Um eine definierte Bruchfläche zu erhalten, werden in der Umfangswandung der Lagerausnehmung 8 zwei einander diametral gegenüberliegende Kerben 10 ausgebildet, die eine Bruchebene 12 definieren, die in Fig. 1 strichpunktiert als Schnittlinie A-A dargestellt ist. Das Bruchtrennen des Pleuel 1 geschieht auf einer Bruchtrennanlage, die in der eingangs zitierten Voranmeldung der Anmelderin ausführlich beschrieben ist, und auf die der Einfachheit halber. Bezug genommen wird. Beim Bruchtrennen taucht in die Pleuellager-Ausnehmung 8 ein Spreizdorn ein, so daß aufgrund der aufgebrachten Spreizkräfte das Pleuel entlang der Bruchebene 12 bricht und somit in den Pleueldeckel 6 und den Pleuelfuß 2 aufgetrennt wird.

Nach dem Trennvorgang werden die Bruchflächen gereinigt, weiterbearbeitet und die beiden Pleuelteile 2, 6 mit Hilfe von den Schrauben zusammengefügt, die das Pleuel entlang den Linien 14 in Fig. 1 durchsetzen.

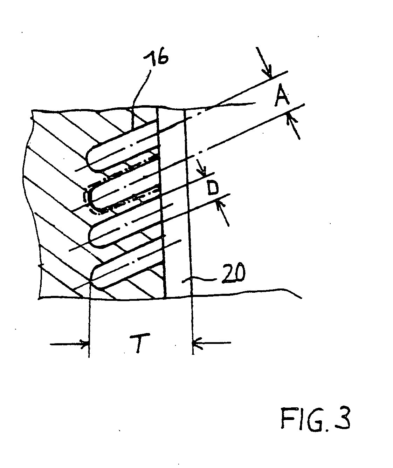

Wie in den Fig. 2 und 3 detailliert dargestellt ist, sind die Kerben - im Gegensatz zum bisher bekannten Stand der Technik - nicht durchgehend ausgebildet sondern in Form einer Perforation, die aus einer Vielzahl von linienförmig hintereinanderliegenden Kerbabschnitten 16 gebildet ist. Beim gezeigten Ausführungsbeispiel sind diese als zylinder- oder fingerförmige Sacklöcher ausgebildet, die sich in der Darstellung nach den Fig. 2, 3 schräg nach unten in die Umfangswandung der Ausnehmung 8 erstrecken. Die Achse der Kerbabschnitte 16 schließt dabei mit der Pleuelachse 18 oder der Kerbachse einen Winkel α von 30-60° ein. Gefügeuntersuchungen haben gezeigt, daß aufgrund der geringen Laserleistung, die Martensitbildung im Randbereich (strichpunktiert in Fig. 3) der Kerbabschnitte 16 minimal ist, so daß die Bruchflächen gut bearbeitbar bleiben. In den Bereichen zwischen den Randbereichen zweier benachbarter Kerbabschnitte 16 konnte keine Martensitbildung festgestellt werden.

Bei einem Ausführungsbeispiel beträgt der Achabstand A zwischen zwei benachbarten Kerbabschnitten 16 etwa 0,25 mm deren Durchmesser D etwa 0,15-0,22 mm und die Tiefe T eines Kerbabschnitts etwa 0,6-0,8 mm.

Wie weiterhin insbesondere aus Fig. 3 hervorgeht hat jeder Kerbabschnitt 16 eine gemeinsame Kerbbasis 20, von der aus sich die einzelnen Kerbabschnitte 16 schräg nach unten erstrecken. Das heißt also, im Bereich der Kerbbasis 20 ist die Kerbe 10 durchgehend ausgeführt, wobei die Breite der Kerbbasis (senkrecht zur Zeichenebene in Fig: 3) etwa dem Durchmesser D entspricht.

Es sei jedoch ausdrücklich darauf hingewiesen, daß die Erfindung auch ohne die gemeinsame Kerbbasis 20 und mit anderen Maßen A, D, T usw. realisierbar ist.

Die Neigung α der Kerbabschnitte ist durch den Einfallswinkel des Laserstrahls vorbestimmt, der durch eine entsprechende Neigung der Fokussieroptik 22 einstellbar ist. Der Laserkopf wird parallel zur Z-Richtung in Fig. 2 nach unten verschoben, so daß durch eine Impulsansteuerung des Laserstrahls die beschriebene Lochreihe von Kerbabschnitten 16 gebildet wird.

Die gemeinsame Kerbbasis 20 läßt sich ausformen, indem der Laser mit einer Leistung betrieben wird, die etwas höher ist, als diejenige, die zur alleinigen Ausbildung der Kerbausnehmungen 16 notwendig wäre. Durch diese etwas erhöhte Laserleistung verschmieren die Kerbabschnitte 16 an ihrem der Lagerausnehmung 8 zugewandten Endabschnitt, so daß diese in die gemeinsame Kerbbasis 20 übergehen. Im Extremfall kann dies soweit führen, daß sich die Kerbbasis 20 nahezu über die gesamte Tiefe der Kerbe erstreckt, so daß die Kerbabschnitte auf ein Minimum reduziert sind.

Um die Kerbabschnitte 16 in dem in Fig. 2 rechten Teil des Pleuelfußes 2 auszubilden, wird die Fokussieroptik 22 um 90° verschwenkt, so daß der Laserstrahl (gestrichelt in Fig. 2) auf die diametral gegenüberliegende Seite der Lagerausnehmung 8 gerichtet ist.

Für den Fall, daß bei der Ausbildung der Kerben im Pleuelfuß 2 eine Kerbbasis 20 hergestellt wird, ist die Tiefe der Kerbbasis 20 vorzugsweise geringer als die Tiefe derjenigen, sich von der Kerbbasis weg erstreckenden Teile der Kerbabschnitte 16. Das heißt, die Tiefe T wird im wesentlichen durch die Länge der Kerbabschnitte 16 bestimmt.

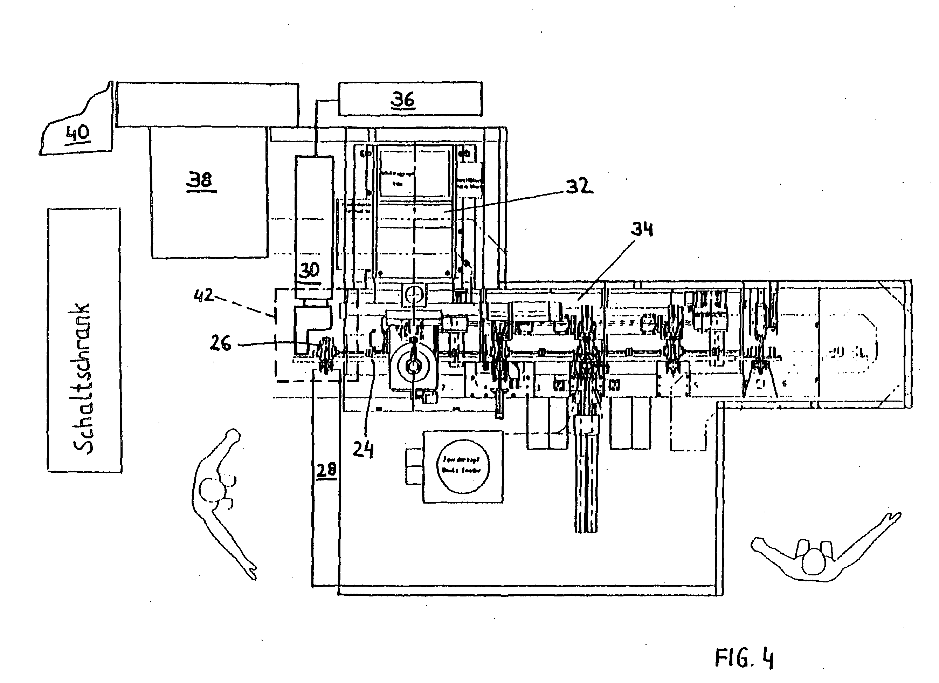

In Fig. 4 ist eine Draufsicht auf eine Einrichtung zur Bruchtrennung eines Pleuels 1 dargestellt.

Diese Einrichtung, im folgenden Cracklinie genannt, hat eine getaktete Transporteinrichtung 24, die Aufnahmen 26 für die Pleuel 1 trägt, die einem Magazin 28 entnommen werden. Die Pleuel 1 liegen mit ihren Großflächen parallel zur Zeichenebene auf den Aufnahmen 26 auf.

Das entnommene Pleuel 1 wird mittels der Transporteinrichtung 24 zunächst eine Laserstation 60 mit einem Lasergerät 30 zugeführt, das beim gezeigten Ausführungsbeispiel als YAG-Laser ausgeführt ist. Nach Einbringen der vorbeschriebenen Kerben wird die Transporteinrichtung 24 angesteuert, so daß im nächsten Arbeitstakt das Pleuel 1 zu einer Crackstation 32 transportiert wird, mit der ein nicht dargestellter Spreizzylinder in die Lagerausnehmung 8 abgesenkt wird, bis das Pleuel entlang der Bruchebene 12 in den Pleuelfuß 2 und den Pleueldeckel 6 bruchgetrennt wird.

Die Pleuelteile werden durch die Aufnahme 26 in ihrer Ausgangsposition gehalten und zu den nächsten Arbeitsstationen 34 ff. gefördert, in denen die Pleuelteile ausgeblasen, weiterbearbeitet und schließlich wieder zusammengefügt werden. Nach dem Zusammenfügen wird das Pleuel von der Transporteinrichtung 24 entnommen und dem nächsten Fertigungsschritt zugeführt.

In Fig. 4 sind weiterhin noch mit den Bezugszeichen 36, 38 und 40 die Energieversorgung, die Gasversorgung und die Kühlung des Lasers angedeutet.

Da der Laser zur Einbringung einer Kerbe nur relativ geringe Energie benötigt (etwa 60 W mittlere Leistung) kann ein Laser mit geringen geometrischen Abmessungen verwendet werden, so daß die Gesamtanlage sehr kompakt im Aufbau ist. Die erforderlichen Sicherheitsmaßnahmen sind ebenfalls auf ein Minimum reduzierbar, wohingegen bei der Verwendung der üblichen Laser mit einer mittleren Leistung von 400-600 W erheblich höhere Anforderungen an die Betriebssicherheit gestellt werden. Wenn im folgenden von einer Leistung die Rede ist, ist die mittlere Leistung des Lasers gemeint, die Impulsleistung liegt wesentlich höher.

Um die Bedienungsperson zu schützen, ist die Transporteinrichtung 24 im Bereich des Lasergeräts 30 durch eine Laserschutzhaube 42 abgedeckt.

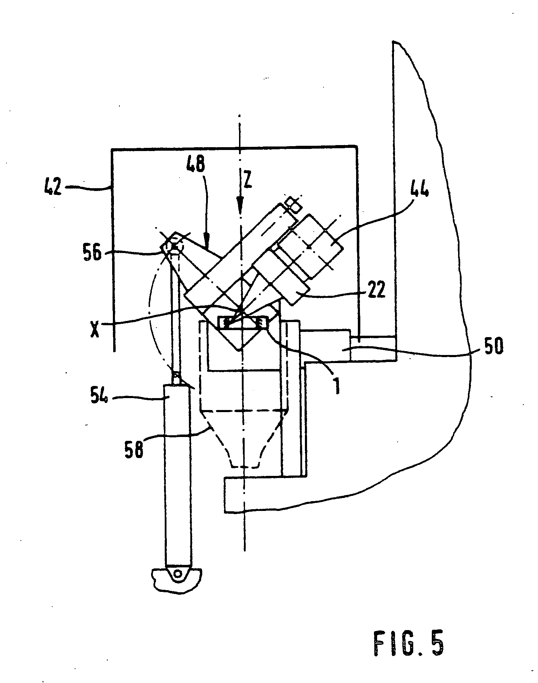

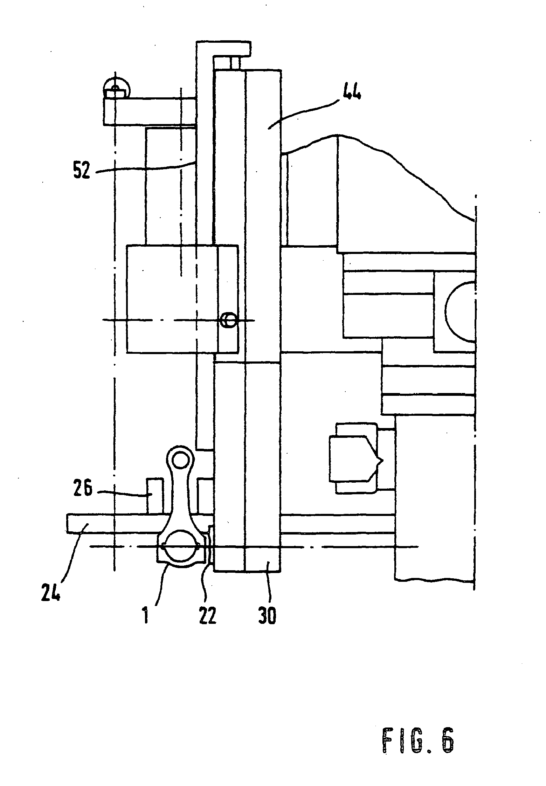

Hinsichtlich weiterer Details des Lasers sei auf die Fig. 5 und 6 verwiesen. Wie daraus hervorgeht, hat das eingesetzte Lasergerät 30 einen etwa quaderförmigen Gehäusekörper 44, an dessen dem Pleuel 1 zuweisenden Endabschnitt die Fokussieroptik 22 angeordnet ist über die der Laserstrahl um 90 hin zum Pleuel 1 umgelenkt wird.

In Fig. 5 ist ein Strahlbündel dargestellt, wobei der Abstand der Fokussieroptik 22 von dem Pleuel 1 der Brennweite der Fokussieroptik entspricht, so daß der Laserstrahl exakt auf den zu bearbeitenden Abschnitt des Laser fokussiert ist. Die Brennweite der Fokussieroptik liegt bei der Pleuelbearbeitung etwa bei 100 mm, wobei der Vergrößerungsfaktor vorzugsweise 2:1 beträgt.

Wie insbesondere aus Fig. 5 hervorgeht, ist das Lasergerät 30 mit der Fokussieroptik 22 auf einem 90°-Schwenktisch 48 gelagert, der seinerseits auf einem Werkzeugtisch 50 befestigt ist der eine Verschiebung des Lasergeräts 30 in Z-Richtung erlaubt.

Der Schwenktisch 48 hat einen Halterungsarm, an dem das Lasergerät 30 mit dem Gehäuse 44 befestigt ist. Der Halterungsarm 52 ist um einen Drehpunkt X drehbar auf dem Schwenktisch 48 gelagert, wobei die Verschwenkung des Schwenktischs 48 über einen Stellzylinder 54 erfolgt, der an einer Lasche 56 angreift.

In der in Fig. 5 dargestellten ausgefahrenen Position ist der Laserstrahl auf die linke Wandung des Pleuel 1 gerichtet, während beim Einfahren des Stellzylinders 54 der Schwenktisch 48 und somit auch die Fokussieroptik 22 um den Gelenkpunkt X verschwenkt wird, so daß der Laserstrahl - wie in Fig. 2 dargestellt - auf die rechte Seitenwandung des Pleuels 1 gerichtet wird. Das heißt, zum Einbringen der beiden Kerben 16 in der Pleuellagerausnehmung 8 wird zunächst eine Lochreihe komplett fertiggestellt, wobei die Fokussieroptik 22 in Richtung Z bewegt wird, so daß durch entsprechende Abstimmung des Vorschubs und der Impulsdauer eine Kerbabschnittreihe mit der gewünschten Kerbabschnitttiefe und dem gewünschten Kerbabschnittabstand ausgebildet wird. Nach Fertigstellung der ersten Kerbe wird die Fokussieroptik um 90° verschwenkt und auf gleiche Weise die zweite Kerbe ausgebildet.

Um das verdampfte Pleuelmaterial von der Bearbeitungsstelle wegzubringen, ist unterhalb der Pleuelaufnahme 26 eine Absaugung 58 vorgesehen.

Während bei den vorbeschrieberien Ausführungsbeispielen eine einzige Fokussier- oder Laseroptik verwendet wurde, um eine Kerbe eines einzelnen Werkstücks auszubilden, werden in den folgenden Ausführungsbeispielen zwei Fokussieroptiken eingesetzt, um zwei parallel zueinander auf der Transporteinrichtung 24 angeordnete Werkstücke gleichzeitig oder zumindest in einem gemeinsamen Bearbeitungszyklus bearbeiten zu können, so daß sich die Produktivität wesentlich erhöhen läßt. In diesem Fall kann eine Crackstation 32 eingesetzt werden, die beispielsweise mit zwei Spreizzylindern versehen sein kann, um die beiden Pleuel gleichzeitig zu cracken.

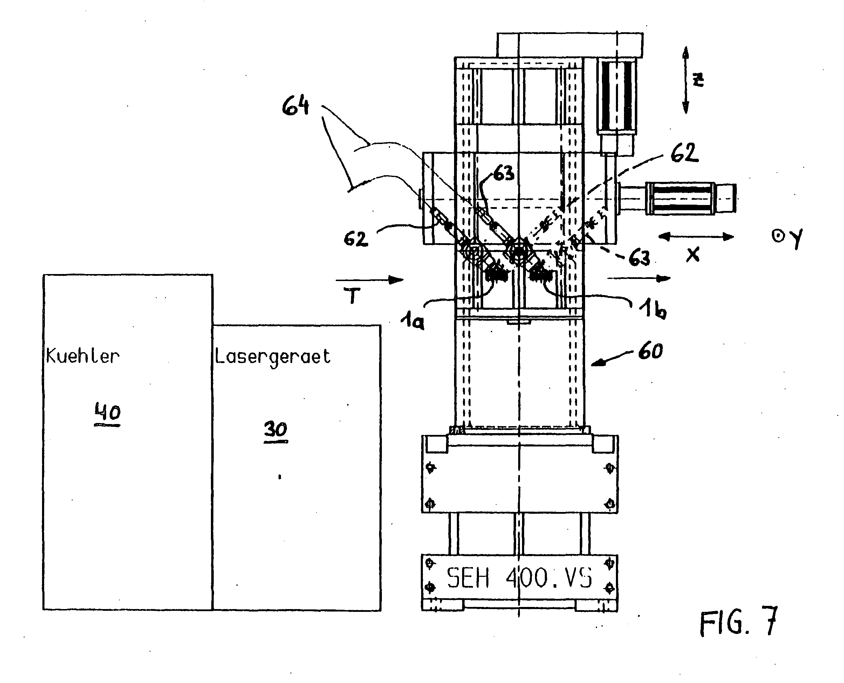

Fig. 7 zeigt ein erstes derartiges Ausführungsbeispiel, bei dem eine Laserstation 60 mit zwei Fokussieroptiken 62 und 63 versehen ist. Über die beiden Fokussieroptiken 62, 63 lassen sich zwei parallel zueinander auf der Transporteinrichtung 24 - oder besser gesagt auf einer entsprechenden Pleuelaufnahme (nicht gezeigt) - angeordnete Pleuel 1a und 1b bearbeiten. Die Fokussieroptiken 62 und 63 sind jeweils über Lichtleiter 64 mit dem Lasergerät 30 verbunden, indem der eigentliche Laserstrahl erzeugt wird. Im vorliegenden Fall handelt es sich vorzugsweise um einen YAG-Laser mit einer Leistung von etwa 60 W. Dem Lasergerät 30 ist - wie beim vorbeschriebenen Ausführungsbeispiel - ein Kühler 40 und gegebenenfalls eine Gasversorgung (nicht gezeigt) zugeordnet. Es werden handelsübliche Lichtleiter 64 verwendet, wobei bei Verwendung einer Stufenindexfaser eine Durchmesser von etwa 0.2 mm vorteilhaft ist, während bei der Verwendung einer Gradientenfaser auch andere Durchmesser Verwendung finden können. Da die Stufenindexfaser üblicherweise erheblich preiswerter als Gradientenfaser-Lichtleiter sind, werden die erstgenannten Lichtleiter mit dem Durchmesser von etwa 0.2 mm verwendet.

Die Laserstation 60 hat zumindest zwei NC-Achsen Z und X, die eine Horizontal- und Vertikalverschiebung der Fökussieroptiken 62, 63 erlauben. Des weiteren sind die Fokussieroptiken 62, 63 um etwa 90° verschwenkbar in dem Gestell der Laserstation 60 gelagert, so daß diese aus der in Fig. 7 mit durchgezogenen Linien dargestellten Schwenkposition in eine um 90° versetzte Position verschwenkbar sind. Die elastischen Lichtleiter 64 erlauben eine Verschwenkung und eine Verschiebung der Fokussieroptiken 62, 63 in einem weiten Bereich. Da bei diesem Ausführungsbeispiel lediglich die vergleichsweise leichten Fokussieroptiken 62 und 63 verschieb- und verschwenkbar im Gestell der Lasterstation 60 gelagert sind, während das Lasergerät 30 unabhängig davon stationär abgestützt ist, können die Lagerung der Fokussieroptiken 62, 63 und die Stellmotoren für die NC-Achsen vergleichsweise einfach bzw. mit geringerer Leistung ausgeführt werden, wie dies beim vorbeschriebenen Ausführungsbeispiel der Fall ist, da dort sowohl Lasergerät als auch Fokussieroptik in der Laserstation gelagert sind.

Üblicherweise wird die Laserstation 60 auch noch mit einer dritten NC-Achse ausgeführt werden, die eine Verstellung in Y-Richtung erlaubt, so daß eine einfache Anpassung an unterschiedliche Pleuelgeometrien und Brennweiten der Fokussieroptiken 62, 63 möglich ist.

Es sind auch Varianten vorstellbar, bei denen die Fokussieroptiken 62, 63 getrennt voneinander verschwenk- oder verschiebbar sind, wobei diesen dann allerdings getrennte Antriebe zugeordnet sein müssen. Eine derartige Ansteuerung kann beispielsweise bei komplizierten Pleuelgeometrien zur Vermeidung von Kollisionen erforderlich sein.

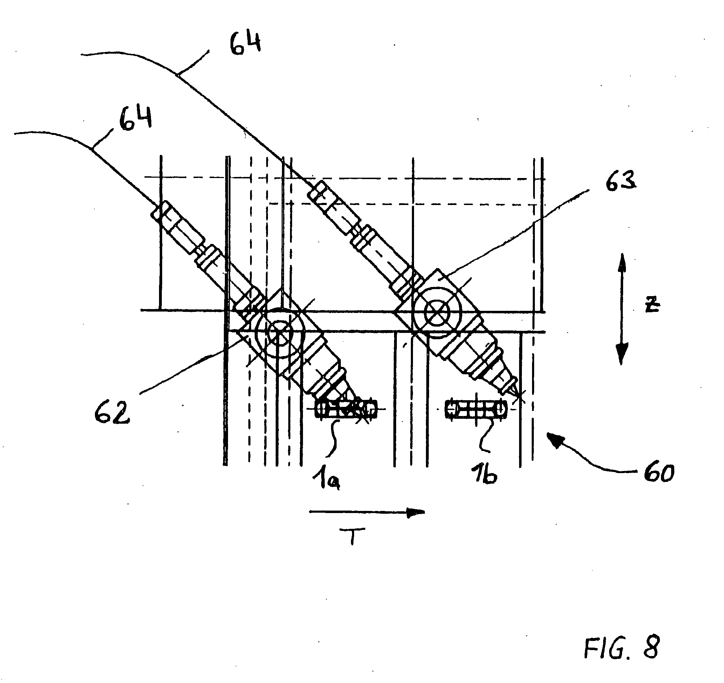

In Fig. 8 ist eine Detaildarstellung der beiden Fokussieroptiken 62, 63 gezeigt. Dabei ist die in Fig. 8 rechte Fokussieroptik 63 in einer Ausgangsposition dargestellt, in der die Fokussieroptik 63 außerhalb des Pleuel 1b angeordnet ist. Eine derartige Ausgangsposition kann die Fokussieroptik 63 beispielsweise vor Beginn eines Bearbeitungszyklus einnehmen. Zu Beginn eines jeden Bearbeitungszyklus werden die beiden Pleuel 1a, 1b in Transportrichtung T der Bearbeitungsstation 60 zugeführt, so daß diese in Parallelabstand in entsprechend ausgebildeten Pleuelaufnahmen aufgenommen sind. Die Lageorientierung der beiden Pleuel 1a, 1b entspricht dabei derjenigen, die sie auch in der Crackstation einnehmen.

Anschließend werden die Fokussieroptiken 62, 63 über die NC-Achsen (X, Y, Z) verfahren, bis die beiden Optiken mit Bezug zur gewünschten Kerblinie ausgerichtet und fokussiert sind. Beide Fokussieroptiken 62, 63 nehmen dann etwa eine Position ein, wie sie die in Fig. 8 links dargestellte Fokussieroptik 62 einnimmt, wobei allerdings die Fokussieroptik noch oberhalb des Pleuels 1a angeordnet ist. Durch entsprechende Ansteuerung des Lasergerätes 30 und einer nicht dargestellten Strahlweiche wird der Laserstrahl über den Lichtleiter 64 zu einer der Fokussieroptiken 62 oder 63 geführt. Durch impulsartige Ansteuerung des Lasergeräts 30 und durch einen Vorschub in Z-Richtung werden dann die vorbeschriebenen Kerbabschnitte (siehe Fig. 3) beispielsweise an der in Fig. 8 rechten Innenwandung des Pleuels 1a ausgebildet, wobei der Vorschub in Z-Richtung in der Darstellung nach Fig. 8 nach unten gerichtet ist, so daß sich ein "stechender" Arbeitshub ergibt.

Anschließend wird die Strahlweiche umgeschaltet so daß der Laserstrahl zur Fokussieroptik 63 geführt ist. Durch einen anschließenden Vorschub nach oben (parallel zur Z-Richtung) werden dann die Kerbabschnitte der in Fig. 8 rechten innenwandung des Pleuels 1b ausgebildet, wobei sich durch die entgegengesetzte Vorschubrichtung ein "schleppender" Arbeitshub ergibt.

Nach Ausbilden der Kerbabschnitte in dem Pleuel 1b werden den beiden Fokussieroptiken 62, 63 nach oben (Z-Richtung) in Fig. 8 gefahren, um 90° verschwenkt, so daß sie die in Fig. 7 gestrichelt eingezeichnete Position einnehmen. Anschließend werden die beiden Fokussieroptiken 62, 63 durch eine entsprechende Vorschubbewegung in X-Richtung mit Bezug zu den Pleueln 1a, 1b ausgerichtet und durch einen Arbeitshub nach unten und entsprechende lmpulsansteuerung des Lasergeräts 30 die in Fig. 8 linken Kerbabschnitte des Pleuels 1b ausgebildet, wobei hier die Vorschubrichtung von oben nach unten erfolgt (stechender Arbeitshub). Durch anschließende Umschaltung der Strahlweiche und Aufwärtsbewegung der Fokussieroptiken 62, 63 wird dann die letzte Kerbe an der linken Innenwandung des Pleuels 1a während der Aufwärtsbewegung ausgebildet (schleppender Arbeitshub), so daß beide Pleuel 1a und 1b mit den vorbeschriebenen Kerbabschnitten versehen sind und in T-Richtung zur Crackstation 32 weitergeführt werden.

Durch den Einsatz einer Strahlweiche und die Verwendung von zwei getrennten Fokussieroptiken 62, 63 können zwei Pleuel 1a, 1b in einem Arbeitszyklus bearbeitet werden, wobei lediglich ein einziger Laser mit vergleichsweise geringer Leistung eingesetzt werden muß, so daß der sicherheitstechnische und apparatetechnische Aufwand auf ein Minimum reduziert ist.

Selbstverständlich kann die oben beschriebene Ausführungsform auch zur Bearbeitung nur eines Werkstückes verwendet werden, wobei in diesem Fall nur eine Fokussieroptik angesteuert wird.

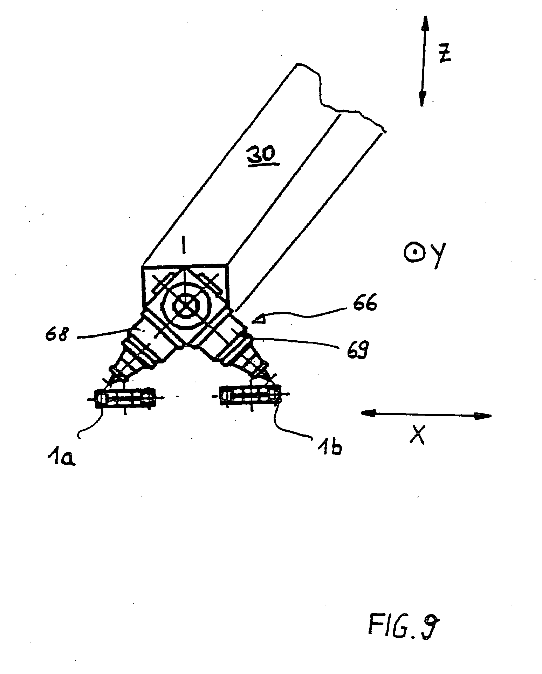

In Fig. 9 ist eine weitere Variante einer Laserstation dargestellt, wobei die Laserstation wiederum ein Gestell aufweist (nicht gezeigt), in dem ein Lasergerät 30 mit einem Fokussierkopf 66 geführt ist, wobei die Einheit aus Lasergerät 30 und Fokussierkopf 66 entlang NC-Achsen (X, Y Z) verschiebbar geführt ist, so daß die Laserstation für unterschiedliche Pleuelgeometrien einsetzbar ist.

Bei diesem Ausführungsbeispiel ist somit - ähnlich wie bei dem zuerst beschriebenen Ausführungsbeispiel - das Lasergerät mit der Fokussieroptik im Gestell der Laserstation 60 gelagert. Im Unterschied zu diesen Ausführungsbeispielen ist der Fokussierkopf 66 jedoch nicht schwenkbar an der Laserstation 60 oder am Lasergerät 30 gelagert, sondern er verbleibt in der in Fig. 9 dargestellten Ausgangsposition.

Der Fokussierkopf 66 hat zwei Fokussieroptiken 68, 69, deren optische Achsen sich etwa mit einem Winkel von 90° schneiden.

Der Abstand der beiden Pleuel 1a, 1b ist bei diesem gezeigten Ausführungsbeispiel so gewählt, daß die beiden über die Fokussieroptiken 68, 69 erzeugten Laserstrahle gleichzeitig auf die beiden außenliegenden Kerben der Pleuel 1a, 1b fokussierbar sind.

Bei dem gezeigten Ausführungsbeispiel ist ein Lasergerät mit einer Leistung von etwa 120 W vorgesehen, wobei der Laserstrahl über einen nicht gezeigten Strahlteiler auf beide Fokussieroptiken 68, 69 aufteilbar ist, so daß die Leistung pro Fokussieroptik 68, 69 etwa 60 W beträgt. Wie eingangs bereits erwähnt, hat sich eine derartige Leistung als optimal für die Ausbildung der Kerbabschnitte herausgestellt.

Diese Variante ermöglicht es somit, durch einen einzigen Arbeitsgang gleichzeitig zwei Kerben auszubilden.

Ein mit einer derartigen Laserstation durchgeführter Arbeitszyklus kann folgende Abfolge aufweisen:

Das Lasergerät mit dem Fokussierkopf 66 wird zunächst über die NC-Achsen (X, Y, Z) in die in Fig. 9 gezeigte Ausgangsposition gebracht, in der der Fokussierkopf 66 oberhalb der Pleuel 1a, 1b angeordnet ist. Durch Absenken des Fokussierkopfs 66 (inklusive Lasergerät 30) und impulsartige Ansteuerung des Lasergeräts 30 werden bei der Abwärtsbewegung die beiden außenliegenden Kerben des Pleuels 1a und des Pleuels 1b gleichzeitig ausgebildet. Anschließend wird der Fokussierkopf 66 wieder in seine Ausgangsposition zurückbewegt, und der Fokussierkopf 66 in X-Richtung bewegt, bis die Fokussieroptik 68 mit Bezug zur linken Innenwandung (Fig. 9) des rechts angeordneten Pleuels 1b fokussiert ist. Durch einen folgenden Abwärtshub in Z-Richtung wird dann die zweite Kerbe des Pleuel 1b über die Fokussieroptik 68 ausgearbeitet, wobei der vom Lasergerät 30 erzeugte Laserstrahl, über eine Strahlweiche (nicht gezeigt) lediglich zur Fokussieroptik 68 geführt ist - die Fokussieroptik 69 ist in diesem Betriebszustand ohne Wirkung.

Anschließend wird der Fokussierkopf 66 wieder nach oben gefahren und die Fokussieroptik 69 mit Bezug zu der in Fig. 9 rechts liegenden Umfangswandung des linken Pleuels 1a ausgerichtet, so daß nach Umschalten der Strahlweiche und Abwärtsbewgung des Fokussierkopfs 66 die letzte Kerbe des Pleuels 1a hergestellt werden kann.

Bei diesem Ausführungsbeispiel sind somit lediglich drei Arbeitshübe erforderlich, um die vier Kerben auszubilden.

Da bei diesem Ausführungsbeispiel der Fokussierkopf nicht verschwenkt werden muß, kann die Bearbeitungszeit und der Aufwand zur Abstützung der Fokussieroptik gegenüber den vorbeschriebenen Varianten wesentlich verringert werden. In dem Fall, in dem lediglich eine Fokussieroptik 68 oder 69 über die Strahlweiche mit dem Laserstrahl versorgt wird, kann es erforderlich sein, daß der Vorschub und die Impulsdauer an die höhere Leistung des Lasergerätes (120 W) angepaßt werden. Des weiteren ist es vorstellbar, daß durch entsprechende Ansteuerung des Lasergerätes in diesen Betriebszuständen lediglich ein Laserstrahl mit einer geringeren Leistung (60 W) abgegeben wird.

Selbstverständlich ist es auch mit dieser Variante möglich, lediglich ein Pleuel 1a in einem Bearbeitungszyklus zu kerben, indem beispielsweise zunächst durch die Fokussieroptik 68 die in Fig. 9 linke Kerbe des Pleuels 1a ausgebildet wird und nach entsprechendem Querverschieben des Fokussierkopfs 66 und Umschalten der Strahlweiche über die Fokussieroptik 69 die rechte Kerbe ausgebildet wird.

Mit denen in den Fig. 7 bis 9 gezeigten Ausführungsbeispielen läßt sich somit die Produktivität der Laserstation bei minimalem vorrichtungstechnischen Aufwand nochmals weiter steigern, so daß eine höhere Produktionskapazität zur Verfügung gestellt werden kann.

Durch die erfindungsgemäße Ausgestaltung der Kerbabschnitte wird erstmals die Integration einer Laseranlage in eine Cracklinie ermöglicht, wobei aufgrund der geringen Laserleistung, die Martensitbildung im Kerbbereich auf ein Minimum reduziert wird, so daß die Weiterverarbeitung des Pleuels auf einfache Weise möglich ist. Durch die besondere Ausgestaltung der Kerbe mit einer Vielzahl von Kerbabschnitten wird eine Perforation ausgebildet, die ein definiertes Bruchverhalten des Pleuels gewährleistet. Wie bereits vorstehend erwähnt, ist die Anwendung der Erfindung jedoch nicht auf die Pleuelfertigung beschränkt, sondern sie ist allgemein auf Fertigungsverfahren anwendbar, bei denen ein Werkstück in zwei Teile bruchgetrennt werden soll, die im darauffolgenden Arbeitsgang wieder zusammengefügt werden sollen.

## Patentansprüche

1. Verfahren zum Bruchtrennen eines Lagerabschnittes eines metallischen Werkstückes, insbesondere eines Pleuels, das ein Lagerauge mit zwei diametral gegenüberliegenden Kerben aufweist, die den Verlauf einer Bruchebene vorgeben, entlang der das Werkstück in einen Grundkörper und ein Deckelteil bruchgetrennt wird und die bei einem sich anschließenden Fügeschritt gemeinsam wieder das Werkstück bilden, wobei die Kerben durch Aufschmelzen des Werkstoffs mittels Laserenergie ausgebildet werden, **dadurch gekennzeichnet, dass** der Laser derart angesteuert wird, dass eine Vielzahl von zueinander beabstandeten und linienförmig hintereinanderliegenden Kerbabschnitten (16) ausgebildet werden, wobei diese Vielzahl der Kerbabschnitte in Form von entweder zylinder- oder fingerförmigen Sacklöchern ausgebildet sind, die mit ihren Längsachsen schräg zur Kerbachse angestellt sind.

2. Verfahren nach Patentanspruch 1, **dadurch gekennzeichnet, dass** die Breite (D) eines Kerbabschnitts (16) etwa der Breite der Kerbe (10) entspricht.

3. Verfahren nach einem der vorhergehenden Patentansprüche, **dadurch gekennzeichnet, dass** der Laserstrahl während der Bearbeitung einer Kerbe (10, 16) seine Orientierung zur Kerbachsebene beibehält.

4. Verfahren nach Patentanspruch 1, **dadurch gekennzeichnet, dass** der Anstellwinkel (α) etwa 30-60° beträgt.

5. Verfahren nach einem der vorhergehenden Patentansprüche, **dadurch gekennzeichnet, dass** der Laser derart angesteuert ist, dass das Ausbilden einer Kerbe mit einer mittleren Leistung von weniger als 200 W erfolgt.

6. Verfahren nach einem der vorhergehenden Patentansprüche, **dadurch gekennzeichnet, dass** die Kerbabschnitte (16) mit einer Tiefe (T) von weniger als 2 mm, einer Breite (D) von weniger als 0,5 mm und einem Axialabstand (A) von weniger als 1 mm ausgebildet werden.

7. Verfahren nach einem der vorhergehenden Patentansprüche, **dadurch gekennzeichnet, dass** bei jeder Kerbe (10) eine durchgehende Kerbbasis (20) ausgebildet wird, aus der sich die Kerbabschnitte (16) erstrecken.

8. Verfahren.nach einem der vorhergehenden Patentansprüche, zur Bearbeitung zweier Pleuel (1a, 1b) mit einem Laser, der zwei verschwenkbare Fokussieroptiken (62, 63) aufweist, die jeweils über einen Lichtleiter (64) mit einem gemeinsamen Lasergerät (30) verbunden sind, wobei jedem Pleuel (1a, 1b) eine Optik (62, 63) zugeordnet ist, **gekennzeichnet durch** die Schritte:
- Einbringen einer Kerbe (10) in das erste Pleuel (19) mittels der ersten Optik (62) mit einem stechenden Arbeitsvorschub (Vorwärtshub);
- Einbringen einer Kerbe (10) in das zweite Pleuel (1b) mittels der zweiten Optik (63) mit einem schleppenden Arbeitsvorschub (Rückwärtshub);
- Verschwenken der Optiken (62, 63) um etwa 90°;
- Einbringen der zweiten Kerbe (10) in das erste Pleuel (1a) mittels der ersten Optik (62) in einem stechenden Arbeitsgang;
- Einbringen der zweiten Kerbe (10) in des zweite Pleuel (1b) mittels der zweiten Optik (63) in einem schleppenden Arbeitshub.

9. Verfahren nach einem der Patentansprüche 1 bis 7, zur Bearbeitung zweier Pleuel (1a, 1b) mit Laserenergie, bei dem ein Fokussierkopf (66) mit zwei um vorzugsweise 90° zueinander versetzten Fokussieroptiken (68, 69) über Strahlteiler und/oder Strahlweichen mit dem Lasergerät (30) verbunden ist, **gekennzeichnet durch** die Schritte:
- gleichzeitiges Einbringen der außenliegenden Kerben (10) in das erste und das zweite Pleuel (1a, 1b) mittels der ersten bzw. der zweiten Fokussieroptik (68, 69) in einem stechenden Arbeitshub (Vorwärtsbewegung), wobei beide Optiken (68, 69) über eine Strahlteiler versorgt werden;
- Rückbewegung des Fokussierkopfs (66) und Einbringen der zweiten Kerbe (10) in das erste Pleuel (1a) mittels der zweiten Fokussieroptik (69), die über die Strahlweiche versorgt wird;
- Rückbewegung des Fokussierkopfs (66) und Einbringen der zweiten Kerbe (10) in das zweite Pleuel (1b) mittels der ersten Optik (68), die **durch** Umschalten der Strahlweiche versorgt wird.

10. Werkstück, hergestellt nach einem Verfahren gemäß einem der Ansprüche 1 bis 9, mit einem Pleuelauge, das in seiner Umfangswandung zwei diametral gegenüberliegende, den Verlauf einer Bruchebene bestimmende Kerben aufweist, entlang denen das metallische Pleuel in einen Grundkörper und ein Deckelteil bruchtrennbar ist, die bei einem sich anschließenden Fügeschritt gemeinsam wieder das Pleuelauge bilden, wobei die Kerben durch Aufschmelzen des Werkstoffs mittels Laserenergie ausgebildet werden, **dadurch gekennzeichnet, dass** die Kerbe (10) aus einer Vielzahl von im Abstand zueinander stehenden Kerbabschnitten (16) bestehen, wobei alle Kerbabschnitte in Form von entweder zylinder- oder fingerförmigen Sacklöchern ausgebildet sind, die mit ihren Längsachsen schräg zur Kerbachse angestellt sind.

11. Werkstück nach Patentanspruch 10, **dadurch gekennzeichnet, dass** jeder Kerbabschnitt (16) eine Tiefe (T) von weniger als 2 mm, eine Breite (D) von weniger als 0,5 mm und einen Axialabstand (A) von weniger als 1 mm hat.

12. Werkstück nach Patentanspruch 10 oder 11, **dadurch gekennzeichnet, dass** jede Kerbe (10) eine Kerbbasis (20) hat, von der aus sich die Kerbabschnitte (16) erstrecken.

13. Werkstück nach Patentanspruch 12, **dadurch gekennzeichnet, dass** die Kerbbasis (20) eine Tiefe von weniger als 0,5 mm und eine Breite von weniger als 0,5 mm hat.

14. Werkstück nach einem der Patentansprüche 10 bis 13, **dadurch gekennzeichnet, dass** der Anstellwinkel (α) etwa 30°-60° beträgt.

## Claims

1. Process for splitting a bearing portion of a metal workpiece, particularly of a connecting rod, which has a bearing eye having two diametrically opposed notches which prescribe the course of a plane of fracture along which the workpiece is split into a main body and a cap portion and which together re-form the workpiece in a subsequent connecting step, the notches being formed by melting the material by means of laser energy, **characterised in that** the laser is controlled in such a manner that a multiplicity of notch portions (16), arranged with spacing from one another and in linear succession, are formed, that multiplicity of notch portions being in the form of either cylindrical or finger-like blind-holes which are positioned with their longitudinal axes inclined relative to the notch axis.

2. Process according to patent claim 1, **characterised in that** the width (D) of a notch portion (16) corresponds approximately to the width of the notch (10).

3. Process according to either of the preceding patent claims, **characterised in that** the laser beam retains its orientation relative to the axial plane of the notch during the forming of a notch (10, 16).

4. Process according to patent claim 1, **characterised in that** the setting angle (α) is approximately 30° - 60°.

5. Process according to any one of the preceding patent claims, **characterised in that** the laser is controlled in such a manner that the formation of a notch is effected using an average power of less than 200 W.

6. Process according to any one of the preceding patent claims, **characterised in that** the notch portions (16) are in a form having a depth (T) of less than 2 mm, a width (D) of less than 0.5 mm and an axial spacing (A) of less than 1 mm.

7. Process according to any one of the preceding patent claims, **characterised in that**, in the case of each notch (10), a continuous notch base (20) is produced from which the notch portions (16) extend.

8. Process according to any one of the preceding patent for processing two connecting rods (1a, 1b) using a laser which has two pivotable optical focusing units (62, 63), each of which is connected via a light guide (64) to a common laser device (30), an optical unit (62, 63) being associated with each connecting rod (1a, 1b), **characterised by** the steps:
- formation of a notch (10) in the first connecting rod (1a) by means of the first optical unit (62) using a stabbing working feed (forward stroke);
- formation of a notch (10) in the second connecting rod (1b) by means of the second optical unit (63) using a dragging working feed (backward stroke);
- pivoting of the optical units (62, 63) through approximately 90°;
- formation of the second notch (10) in the first connecting rod (1a) by means of the first optical unit (62) in stabbing operation;
- formation of the second notch (10) in the second connecting rod (1b) by means of the second optical unit (63) using a dragging working stroke.

9. Process according to any one of patent claims 1 to 7 for processing two connecting rods (1a, 1b) with laser energy, wherein a focusing head (66) having two optical focusing units (68, 69), offset at preferably 90° to one another, is connected to the laser device (30) via beam splitters and/or beam deflectors, **characterised by** the steps:
- simultaneous formation of the outer notches (10) in the first and the second connecting rod (1a, 1b) by means of the first and the second optical focusing unit (68, 69), respectively, in a stabbing working stroke (forward movement), both optical units (68, 69) being supplied via a beam splitter;
- return movement of the focusing head (66) and formation of the second notch (10) in the first connecting rod (1a) by means of the second optical focusing unit (69) which is supplied via the beam deflector;
- return movement of the focusing head (66) and formation of the second notch (10) in the second connecting rod (1b) by means of the first optical unit (68) which is supplied by switching over the beam deflector.

10. Workpiece, produced in accordance with a process according to any one of claims 1 to 9, having a connecting rod eye which has, in its circumferential wall, two diametrically opposed notches which determine the course of a plane of fracture and along which the metal connecting rod can be split into a main body and a cap portion which together re-form the connecting rod eye in a subsequent connecting step, the notches being formed by melting the material by means of laser energy, **characterised in that** the notches (10) comprise a multiplicity of notch portions (16) arranged with spacing from one another, all the notch portions being in the form of either cylindrical or finger-like blind-holes which are positioned with their longitudinal axes inclined relative to the notch axis.

11. Workpiece according to patent claim 10, **characterised in that** every notch portion (16) has a depth (T) of less than 2 mm, a width (D) of less than 0.5 mm and an axial spacing (A) of less than 1 mm.

12. Workpiece according to patent claim 10 or 11, **characterised in that** every notch (10) has a notch base (20) from which the notch portions (16) extend.

13. Workpiece according to patent claim 12, **characterised in that** the notch base (20) has a depth of less than 0.5 mm and a width of less than 0.5 mm.

14. Workpiece according to any one of patent claims 10 to 13, **characterised in that** the setting angle (α) is approximately 30° - 60°.

## Revendications

1. - Procédé de sectionnement par rupture d'une partie de palier d'une pièce, en particulier d'une bielle, qui présente un oeil de palier avec deux encoches diamétralement opposées, qui définissent le tracé d'un plan de rupture, le long duquel la pièce est sectionnée par rupture en un corps de base et en une partie formant chapeau, qui forment à nouveau ensemble la pièce, lors d'une étape d'assemblage suivante, les encoches étant formées par fusion du matériau au moyen d'énergie laser, **caractérisé en ce que** le laser est commandé de manière que soit formé un grand nombre de portions d'encoche (16) espacées les unes des autres et situées les unes derrière les autres en ligne, ce grand nombre de portions d'encoche étant sous forme de trous borgnes soit cylindriques soit en forme de doigts dont l'axe longitudinal est orienté obliquement par rapport à l'axe des encoches.

2. - Procédé selon la revendication 1, **caractérisé en ce que** la largeur (D) d'une portion d'encoche (16) correspond à peu près à la largeur d'encoche (10).

3. - Procédé selon l'une des revendications précédentes, **caractérisé en ce que** le rayon laser conserve son orientation par rapport au plan de l'axe de l'encoche, pendant l'usinage d'une encoche (10, 16).

4. - Procédé selon la revendication 1, **caractérisé en ce que** l'angle d'inclinaison (α) est d'environ 30 à 60°.

5. - Procédé selon l'une des revendications précédentes, **caractérisé en ce que** le laser est commandé de manière que la formation d'une encoche s'effectue avec une puissance moyenne inférieure à 200 W.

6. - Procédé selon l'une des revendications précédentes, **caractérisé en ce que** les portions d'encoche (16) sont formées avec une profondeur (T) inférieure à 2 mm, une largeur (D) inférieure à 0,5 mm et un écartement axial (A) inférieur à 1 mm.

7. - Procédé selon l'une des revendications précédentes, **caractérisé en ce que** pour chaque encoche (10) il est formé une base d'encoche (20) continue, à partir de laquelle s'étendent les portions d'encoche (16).

8. - Procédé selon l'une des revendications précédentes, pour l'usinage de deux bielles (1a, 1b) avec un laser, qui comporte deux optiques de focalisation (62, 63) pivotantes, qui sont reliés chacune par un guide de lumière (64), à un appareil à laser (30) commun, à chaque bielle (1a, 1b) étant associée une optique (62, 63), **caractérisé par** les étapes suivantes:
- pratiquer une encoche (10) dans la première bielle (1a) au moyen de la première optique (62) avec une course de travail pénétrante (course avant);
- pratiquer une encoche (10) dans la deuxième bielle (1b) au moyen de la deuxième optique (63) avec une course de travail ressortante (course arrière);
- pivoter les optiques (62, 63) d'environ 90°;
- pratiquer la deuxième encoche (10) dans la première bielle (1a) au moyen de la première optique (62) dans une course de travail pénétrante;
- pratiquer la deuxième encoche (10) dans la deuxième bielle (1b) au moyen de la deuxième optique (63) dans une course de travail ressortante.

9. - Procédé selon l'une des revendications 1 à 7, pour l'usinage de deux bielles (1a, 1b) avec de l'énergie laser qui comporte une tête de focalisation (66) avec deux optiques de focalisation (68, 69), de préférence décalées de 90° l'une par rapport à l'autre, qui sont reliées à l'appareil à laser (30) par des diviseurs de rayon et/ou des dispositifs d'aiguillage de rayon, **caractérisé par** les étapes suivantes:
- pratiquer simultanément les encoches (10) extérieures dans la première et la deuxième bielles (1a, 1b) respectivement au moyen de la première et de la deuxième optique de focalisation (68, 69), dans une course de travail pénétrante (mouvement avant), les deux optiques (68, 69) étant alimentées par un diviseur de rayon;
- mouvement de retour de la tête de focalisation (66) et réalisation de la deuxième encoche (10) dans la première bielle (1a) au moyen de la deuxième optique de focalisation (69), qui est alimentée par le dispositif d'aiguillage de rayon;
- mouvement de retour de la tête de focalisation (66) et réalisation de la deuxième encoche (10) dans la deuxième bielle (1b) au moyen de la première optique (68) qui est alimentée par commutation du dispositif d'aiguillage de rayon.

10. - Pièce, en particulier réalisable selon un procédé suivant l'une des revendications 1 à 9, avec un oeil de bielle, qui présente dans sa paroi périphérique deux encoches diamétralement opposées, définissant le tracé d'un plan de rupture, le long desquelles la bielle métallique peut être sectionnée par rupture en un corps de base et en une partie formant chapeau, qui forment à nouveau ensemble l'oeil de bielle, lors d'une étape d'assemblage suivante, les encoches étant formées par fusion du matériau au moyen d'énergie laser, **caractérisée en ce que** l'encoche (10) est constituée d'un grand nombre de portions d'encoche (16) espacées les unes des autres, toutes les portions d'encoche sont en forme de trous borgnes soit cylindriques soit en forme de doigts dont l'axe longitudinal est orienté obliquement par rapport à l'axe des encoches.

11. - Pièce selon la revendication 10, **caractérisée en ce que** chaque portion d'encoche (16) présente une profondeur (T) inférieure à 2 mm, une largeur (D) inférieure à 0,5 mm et un écartement axial (A) inférieur à 1 mm.

12. - Pièce selon la revendication 10 ou 11, **caractérisée en ce que** chaque encoche (10) présente une base d'encoche (20), à partir de laquelle s'étendent les portions d'encoche (16).

13. - Pièce selon la revendication 12, **caractérisée en ce que** la base d'encoche (20) présente une profondeur inférieure à 0,5 mm et une largeur inférieure à 0,5 mm.

14. - Pièce selon l'une des revendications 10 à 13, **caractérisée en ce que** l'angle d'inclinaison (α) est d'environ 30° à 60°.
